# FASCICULE DE BREVET EUROPEEN

(11) **EP 1 732 737 B1**
(45) Date de publication et mention de la délivrance du brevet: **10.09.2008**
(21) Numéro de dépôt: 05753750.8
(22) Date de dépôt: 08.04.2005
(51) Int. Cl.: B26D 3/16, B26D 7/01, H02G 1/00

(54) **OUTIL DE COUPE POUR DECOUPER DES PROFILES CREUX**
WERKZEUG ZUM SCHNEIDEN VON HOHLPROFILEN
TOOL FOR CUTTING HOLLOW PROFILES

(30) Priorité: 09.04.2004 FR 0403781
(43) Date de publication de la demande: 20.12.2006
(73) Titulaire: ETABLISSEMENTS PIERRE GREHAL ET COMPAGNIE SA, 95350 Saint-Brice-sous-Forêt (FR)
(72) Inventeur: MARCON, Lionel, F-95330 Domont (FR)
(74) Mandataire: Berger, Helmut
(86) Numéro de dépôt international: PCT/FR2005/000865
(87) Numéro de publication internationale: WO 2005/102627

(56) Documents cités:
- DE-U1- 9 304 153
- DE-U1- 9 401 726
- FR-A- 2 796 977
- US-A- 5 924 201
- US-A1- 2002 083 593

## Description

L'invention concerne un outil de coupe pour découper des profilés creux en matière plastique. Le document US-A-5 924 201 divulgue un outil de ce genre.

Dans de nombreux cas, notamment dans le cas d'une installation électrique, il est nécessaire de pouvoir découper de façon très précise et très nette des profilés creux en matière plastique. De plus, lorsqu'il s'agit de découper de tels profilés creux dans le cadre d'une installation nouvelle, il s'agit de pouvoir découper une grande quantité de ces profilés dans un temps relativement court, mais quand même avec la précision requise. En effet, lorsque l'on installe des câbles en saillie sur un pan de mur ou lorsque l'on les encastre dans un pan de mur mais de manière facilement accessible, on utilise des gaines ayant une section rectangulaire et formées par un profilé en U, éventuellement pourvu d'une ou deux parois internes de séparation, formant trois des quatre parois du profilé creux et un couvercle, attaché au profilé en U par des charnières ou entièrement amovible, formant la quatrième paroi du profilé creux. Toutefois, on utilise pour des installations électriques aussi des gaines cylindriques de diamètres différents. Sous des conditions d'installation énoncées plus haut, il s'avère insuffisant tant sur le plan de la découpe précise que sur celui de la rapidité de découpe, de vouloir découper de tels profilés creux moyennant une scie ou moyennant une pince à découper ressemblant à un sécateur.

Par ailleurs, puisque de tels profilés creux sont utilisés principalement dans des installations électriques comme gaines de câble, il s'agit de pouvoir découper des profilés creux de différentes sections et longueurs et notamment aussi sous divers angles de biseau en plus de l'angle droit.

Le but de l'invention est de proposer un outil de coupe pour découper des profilés creux en matière plastique, qui réunit en lui l'avantage d'une coupe rapide et précise avec celui d'une coupe de profilés creux de différentes dimensions.

Le but de l'invention est atteint avec un outil de coupe pour découper des profilés creux en matière plastique, qui comporte un socle et une lame montée mobile sur un support attaché au socle et permettant de déplacer la lame entre une position ouverte pour recevoir, entre le socle et la lame, un profilé qui doit être découpé, et une position fermée à la fin d'une découpe.

Selon l'invention, le socle supporte une enclume pourvue d'une rainure conformée pour recevoir une partie de la lame lorsque celle-ci se trouve en position fermée et le support est pourvu d'un moyen de guidage calibré assurant un déplacement rectiligne de la lame entre la position ouverte et la position fermée.

Cette conception de l'invention permet de poser le profilé, qui doit être découpé, sur l'enclume avec n'importe quelle orientation du profilé creux par rapport à l'orientation de la lame. Lorsque le profilé, qui doit être découpé, est une gaine à section rectangulaire, elle peut être posée sur n'importe laquelle des parois latérales du profilé creux. Ainsi, on obtient des découpes propres et rapides aussi bien en coupes droites qu'en coupes en biseau. Par ailleurs, grâce au déplacement rectiligne de la lame, le profilé, qui doit être découpé, ne risque pas d'être chassé par la lame au début de la découpe. Et ceci est valable aussi bien lorsque le profilé est supporté par deux parois adjacentes, situation de la coupe droite, que lorsque le profilé est supporté uniquement par le côté par lequel il repose sur l'enclume, ce qui correspond à la découpe en biseau.

L'outil de coupe de l'invention est conçu de manière à pouvoir être utilisé aussi bien comme outil à main que comme outil en position fixe. A cet effet, l'outil de coupe de l'invention comprend avantageusement au moins un premier levier monté pivotant dans le support de l'outil. Ce premier levier est destiné à coopérer avec la lame de manière à pouvoir la déplacer au moins de la position ouverte vers la position fermée.

Selon un mode de réalisation préféré, l'outil de l'invention comprend en dehors du premier levier aussi un second levier, le premier et le second leviers étant articulés entre eux sur un axe de pivotement permettant à la fois de saisir l'outil et de faire déplacer la lame au moins de la position ouverte vers la position fermée. Alors que le premier et le second leviers peuvent être montés tous les deux pivotant sur le support de l'outil de coupe, il paraît préférable que le premier levier soit monté à la fois pivotant par rapport au second levier et pivotant par rapport au support et que le second levier soit monté fixe par rapport au support de l'outil.

Lorsque l'outil de coupe de l'invention est réalisé uniquement pour la découpe de profilés de faibles dimensions, par exemple pour des profilés à section rectangulaire de 10 millimètres sur 20 millimètres, l'entraînement de la lame moyennant le premier levier peut être réalisé de manière simple, notamment par une liaison articulée entre le premier levier et la lame. La lame est alors montée sur une tige, par exemple une tige métallique à section circulaire, à laquelle est attachée une extrémité correspondante du premier levier. Cette conception permet de déplacer la lame moyennant le premier levier aussi bien de la position ouverte vers la position fermée que de la position fermée vers la position ouverte.

Cependant, pour tirer le meilleur profit de l'outil de coupe de l'invention, il sera dimensionné de manière à pouvoir découper également des profilés creux de dimensions relativement grandes, par exemple des profilés dont la section rectangulaire est de l'ordre de 25 millimètres sur 30 millimètres ou même de 45 millimètres sur 70 millimètres. Ceci implique alors une course assez longue de la lame. Pour cette raison, il est préférable que la lame soit montée sur une crémaillère et sélectivement actionné par le premier levier moyennant un mécanisme comme par exemple celui décrit dans le document FR-A-2796977. Ce mécanisme comprend un cliquet d'entraînement monté basculant autour d'un premier axe transversal fixé au premier levier et transmettant à la crémaillère, dans un sens d'avancement de la position ouverte vers la position fermée de la lame, un mouvement de translation lié au mouvement de pivotement du premier levier, et un cliquet de retenue, monté basculant autour d'un second axe transversal, pour interdire à la crémaillère un mouvement dans un sens inverse du sens d'avancement.

Le déplacement de la lame de la position fermée vers la position ouverte, tout comme un déplacement de la lame de la position ouverte vers une position partiellement fermée, est obtenu par un retournement de la crémaillère autour de son axe longitudinal, et ainsi en sortant la face comportant les encoches de la crémaillère du rayon d'action du cliquet d'entraînement, suivi d'une translation dans un sens axial ou l'autre de la crémaillère.

Par ailleurs, la lame est avantageusement pourvue de deux tranchants successifs formant une pointe entre eux et enfermant un angle obtus allant de 110 à 150 degrés environ. Un angle préféré est 130 degrés.

La lame peut être formée de manière symétrique, la pointe formée par les deux tranchants de la lame étant alors positionnée sur une ligne centrale de la lame.

Cependant, il est également concevable que la lame soit formée de manière asymétrique, c'est-à-dire que les deux tranchants forment des angles différents avec la direction de translation de la lame et forment ainsi une pointe en dehors de l'axe longitudinal de symétrie de la lame.

Le déplacement rectiligne de la lame, c'est-à-dire un déplacement en translation suivant un axe longitudinal de la tige ou crémaillère à laquelle la lame est fixée, est assuré par un guidage calibré formé à l'intérieur du support de l'outil. Lorsque le support est réalisé en métal, on insert avantageusement un élément tubulaire en matière plastique, précisément calibré en ce qui concerne son diamètre intérieur pour éviter un jeu entre la tige ou crémaillère et l'élément tubulaire, dans lequel coulisse la tige ou crémaillère lors des déplacement de la lame.

Si par contre le support est réalisé en matière plastique, on peut renoncer à un insert. En effet, pour éviter un grippage entre le support et la tige ou crémaillère, les deux pièces destinées à être en déplacement relatif l'une par rapport à l'autre, doivent être réalisées en des matériaux de natures, ou pour le moins de duretés, différentes. Ainsi, lorsque la tige ou crémaillère est en métal, on utilisera un insert en matière plastique uniquement lorsque le support est également en métal.

L'outil de coupe de l'invention peut également comprendre l'une ou l'autre des caractéristiques suivantes, considérées isolément ou selon toute combinaison techniquement possible :
- le socle est pourvu de butées montées de part et d'autre du socle et conformées de manière à permettre de positionner le profilé, qui doit être découpé, dans une position angulaire précise par rapport à l'orientation de la lame pour obtenir une découpe en biseau du profilé ;
- l'enclume est pourvu de butées disposées de part et d'autre du socle et conformées de manière à permettre de positionner le profilé, qui doit être découpé, dans une position angulaire précise par rapport à l'orientation de la lame pour obtenir une découpe en biseau du profilé, l'enclume et les butées formant une unité amovible conformée pour un angle particulier de biseau et interchangeable avec d'autres unités interchangeables conformées pour d'autres angles particuliers de biseau ;
- lorsque l'enclume pourvue de butées forme une unité amovible, cette unité peut être montée sur le socle moyennant un mécanisme d'encliquetage pour assurer un remplacement rapide ; toutefois, des fixations moyennant des clips ou des boulons ou des vis sont également concevables ;
- l'enclume est pourvue de butées disposées de part et d'autre du socle et conformées de manière à permettre de positionner le profilé, qui doit être découpé, dans une position angulaire précise par rapport à l'orientation de la lame pour obtenir une découpe en biseau du profilé, les butées formant une unité amovible conformée pour un angle particulier de biseau et interchangeable avec d'autres unités interchangeables conformées pour d'autres angles particuliers de biseau ; l'enclume et les butées sont pourvus de trous de passage permettant de fixer les butées sur l'enclume par un boulon, par une vis avec un écrou à ailettes ou par d'autres moyens de fixation permettant de fixer et d'enlever rapidement l'unité de butées ;
- en variante, les butées formant une unité amovible sont pourvues chacune d'un trou oblong permettant de fixer l'unité de butées dans au moins deux positions différentes, une position de travail et une position rétractée, sans avoir besoin de défaire la fixation entièrement ;
- le socle dépasse transversalement par rapport à l'étendue longitudinale du support de l'outil, au moins vers un côté ou vers l'autre de l'outil ; cette disposition de l'invention permet d'utiliser un même outil comme outil à main et comme outil monté fixe sur un support établi ; le dépassement permet de saisir l'outil par une pince ou un serre-joint ou tout autre outil approprié et de le monter sur le bord d'une table ou sur le bord de la plaque supérieure d'un établi ; en variante, le socle peut également être pourvu de perforations permettant de fixer l'outil sur un établi ou une planche moyennant des vis ; la possibilité de fixer l'outil sur une planche de bois est particulièrement appréciée lorsque l'outil est utilisé sur un sol meuble, où la planche de bois permet d'abord de donner à l'outil un appui stable et où elle permet en plus de fixer, par exemple clouer ou visser, l'outil sur cet appui ;
- le socle comprend deux traverses orientées sensiblement perpendiculairement par rapport à l'orientation de la lame, ces traverses étant destinées à donner à l'outil une assise sûre, même lorsque l'outil est conformé pour des découpes de dimensions assez grandes ; la taille des deux traverses est avantageusement choisie selon l'utilisation prévue de l'outil, à savoir comme outil portatif ou comme outil destiné à être fixé sur un plan de travail ; pour cette dernière utilisation, les traverses peuvent être pourvues de trous ;
- le socle comprend une traverse orientée sensiblement perpendiculairement par rapport à l'orientation de la lame et une prolongation s'étendant suivant l'orientation de la lame, la traverse étant disposée du côté des leviers de l'outil et la prolongation s'étendant au-delà de l'enclume en s'éloignant de la traverse, la traverse et la prolongation formant ainsi un trépied destiné à donner à l'outil une assise encore plus sûre que deux traverses ;
- l'outil est pourvu d'un levier escamotable destiné à faire mouvoir la lame de la position ouverte vers la position fermée ; le levier escamotable est formé, par exemple, en deux ou plusieurs parties reliées entre elles par des charnières afin de pouvoir replier le levier sur lui-même pendant le transport de l'outil ou lorsque l'outil est rangé ; en variante, le levier est formé en deux ou plusieurs parties dissociables, par exemple emboîtables l'une dans l'autre ;
- l'outil comporte une structure en injection plastique renforcée par des inserts en acier trempé.

D'autres caractéristiques et avantages de l'invention ressortiront de la description ci-après d'un mode de réalisation de l'outil de coupe de l'invention. Cette description est faite en référence aux dessins dans lesquels
- la figure 1 montre l'outil de coupe selon un premier mode de réalisation de l'invention en une vue latérale,
- la figure 2 montre l'enclume amovible de l'outil de la figure 1 en une vue en perspective,
- la figure 3 montre l'enclume amovible de la figure 2 en une vue en perspective, détachée du socle de l'outil,
- la figure 4 montre l'outil de coupe selon un second mode de réalisation de l'invention en une vue en perspective,
- la figure 5 montre l'enclume de l'outil de la figure 4 avec des butées en position rétractée,
- la figure 6 montre l'enclume de l'outil de la figure 4 avec des butées en position de travail,
- la figure 7 montre les moyens de déverrouillage de l'outil de la figure 4,
- la figure 8 montre l'outil de la figure 4 en début de découpe d'un profilé rectangulaire,
- la figure 9 montre l'outil de la figure 4 en début de découpe d'un profilé rond tubulaire, et
- la figure 10 montre une variante de l'outil de la figure 4.

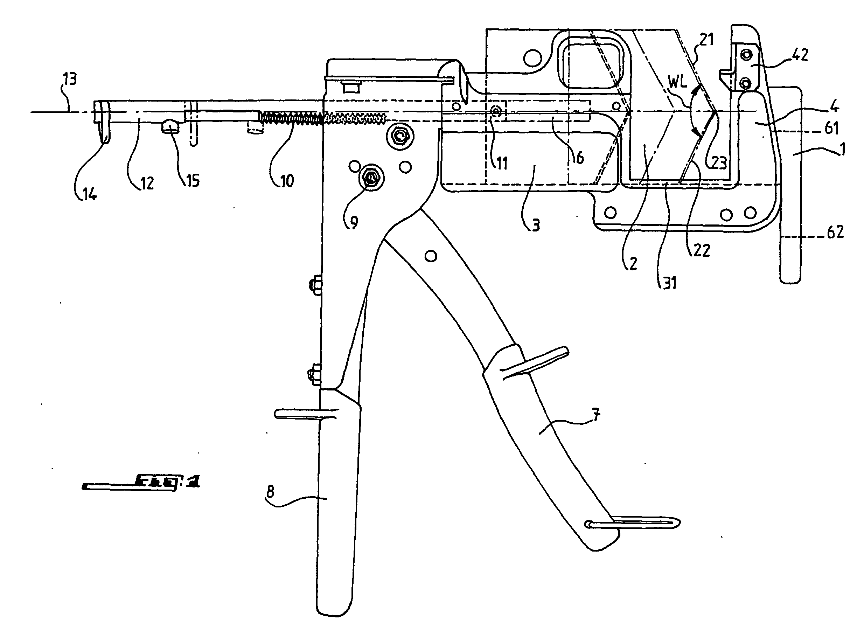

L'outil de coupe selon un premier mode de réalisation de l'invention comporte, comme représenté sur la figure 1, un socle 1 et une lame 2 montée mobile sur une structure ou support 3 attaché au socle 1 et permettant de déplacer la lame 2 en translation axiale entre une position ouverte pour recevoir, entre le socle 1 et la lame 2, un profilé qui doit être découpé, et une position fermée à la fin d'une découpe.

Le socle 1 supporte une enclume 4 pourvue d'une rainure 5 conformée pour recevoir une partie de la lame 2 lorsque celle-ci se trouve en position fermée. Le support 3 est pourvu d'un moyen de guidage calibré 6 sous la forme d'un insert cylindrique creux assurant un déplacement rectiligne de la lame 2 entre la position ouverte et la position fermée. Le support 3 comprend également une rainure 31 orientée dans le sens des translations de la lame 2. La rainure 31 reçoit, de manière coulissante, un bord correspondant de la lame 2 pendant ses déplacements pour éviter tout effet de rotation de la lame 2 autour de son propre axe longitudinal.

Alors que le support 3 est représenté sur la figure 1 dans une configuration adaptée plutôt pour la découpe de profilés ayant une section rectangulaire, il est également concevable, sans sortir du principe de la présente invention, de conformer le support 3 pour la découpe de profilés cylindriques. Ceci peut être fait essentiellement de deux manières. Selon la première, le support 3 et l'enclume 4 dans la version représentée sur la figure 1, c'est-à-dire avec une ouverture rectangulaire pour recevoir le profilé à découper, sont remplacés par un support et une enclume formant ensemble une ouverture semi-circulaire ou ayant pour le moins des faces opposées partiellement rondes. Pour qu'un utilisateur de l'outil puisse effectuer une telle modification facilement et surtout à plusieurs reprises dans les deux sens, le support doit être conçu comme un élément modulaire.

Selon une seconde manière d'adapter l'outil alternativement à la découpe d'un profilé à section rectangulaire ou à la découpe d'un profilé à section circulaire ou, plus généralement, ronde, on prévoit un insert dont la forme et les dimensions extérieures correspondent à l'ouverture rectangulaire formée par le support 3 et l'enclume 4 et dont la forme intérieure constitue l'ouverture semi-circulaire ou ronde. Cet insert est alors mise en place ou enlevé selon la forme du profilé à découper.

L'outil de coupe comprend par ailleurs un premier levier 7 et un second levier 8 permettant à la fois de saisir l'outil et de faire déplacer la lame 2 de la position ouverte vers la position fermée. Le premier levier 7 est monté pivotant dans le support 3 autour d'un axe 9 transversal par rapport à l'étendue longitudinale de l'outil et coopère avec la lame 2 pour le déplacement de celle-ci de la position ouverte vers la position fermée, alors que le second levier 8, orienté perpendiculairement par rapport à l'étendue longitudinale du support 3, est monté fixe par rapport au support 3.

La lame 2 est montée sur une première extrémité 11 d'une crémaillère 10 ayant un axe longitudinal 13 qui s'étend entre la première extrémité 11 et une seconde extrémité 12 de la crémaillère. La crémaillère 10 est montée coulissante dans le moyen de guidage calibré 6 et dépasse du support 3, du côté opposé par rapport à la lame 2, par la seconde extrémité 12 où elle est pourvue d'une poignée 14 permettant de tourner la crémaillère 10 autour de son axe longitudinal 13 entre une position active permettant à la crémaillère 10 de coopérer avec le premier levier 7 pour déplacer la lame 2 de la position ouverte vers la position fermée, et une position passive permettant de déplacer la lame 2 de la position fermée vers la position ouverte. La seconde extrémité 12 de la crémaillère est également pourvue d'une vis d'arrêt 15 formant une butée lors de la translation de la crémaillère. Cette butée sert d'une part comme limiteur de course de la lame lorsque celle-ci est déplacée vers la position fermée, et d'autre part pour éviter que la lame, ensemble avec la crémaillère, sorte accidentellement du guide calibré 6.

La lame 2 est pourvue de deux tranchants 21, 22 successifs formant une pointe 23 entre eux et donnant à la lame une forme symétrique. Les deux tranchants 21, 22 enferment entre eux un angle obtus WL allant de 110° à 150° environ. L'angle WL optimal pour obtenir un bon résultat de découpe, sans déformation notable du profilé, et avec une vitesse de découpe intéressante, est de l'ordre de 130°.

Pour faciliter la découpe en biseau, l'enclume 4 est pourvue de butées 41, 42 montées de manière amovible de part et d'autre de l'enclume 4 et conformées de manière à permettre de positionner le profilé, qui doit être découpé, sous un angle WB1 ou WB2, dans une position angulaire précise par rapport à l'orientation de la lame 2. Les butées 41, 42 sont avantageusement vissées sur l'enclume 4.

Selon une variante de réalisation non représentée sur les dessins, les butées 41, 42 sont vissées sur le socle 1.

Selon une autre variante de réalisation, les butées sont fixées de manière permanente sur le socle 1 ou sur l'enclume 4, par exemple moyennant des rivets. Toutefois, une telle réalisation prive l'utilisateur de la possibilité de préparer l'outil selon ses besoins pour différents angles pour lesquels des butées peuvent être fournies avec l'outil. La fixation permanente ou définitive des butées pourrait par contre être choisie pour une version très bon marché de l'outil.

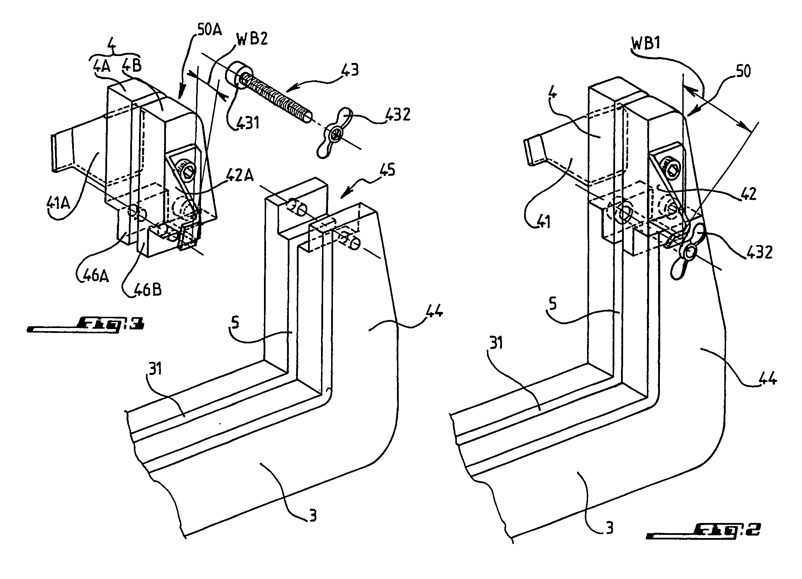

Selon encore une autre variante de réalisation, qui est représentée sur les figures 2 et 3, l'enclume 4 est formée par deux pièces interchangeables 4A et 4B séparées par la rainure 5 qui a ici la forme d'une fente traversant l'enclume entièrement. Les pièces 4A et 4B sont porteurs respectivement de la butée 41 et de la butée 42 et forment avec celles-ci une unité amovible 50 avec un angle de biseau WB1 orienté respectivement vers un côté ou vers l'autre de l'enclume. Les pièces 4A et 4B sont partiellement prolongé de manière à former ensemble un tenon 46A, 46B destiné à être inséré dans une encoche ou mortaise 45 pratiquée dans une partie arrière 44 de l'enclume. Le tenon 46A, 46B et la mortaise 45 peuvent avoir une forme droite ou une forme de queue d'aronde.

L'unité amovible 50 peut se présenter avec d'autres angles de biseau, par exemple avec un angle de biseau WB2. Cette unité est référencée 50A.

Dans un cas comme dans l'autre, l'unité amovible 50 ou 50A est avantageusement fixée sur la partie arrière 44 de l'enclume par un boulon 43 formé par une vis 431 et un écrou à ailettes 432 permettant un démontage rapide du boulon sans outillage.

Pour la fixation de l'outil sur une table ou un établi, le socle 1 est avantageusement pourvu de perforations 61, 62 permettant de fixer l'outil moyennant des vis ou des boulons.

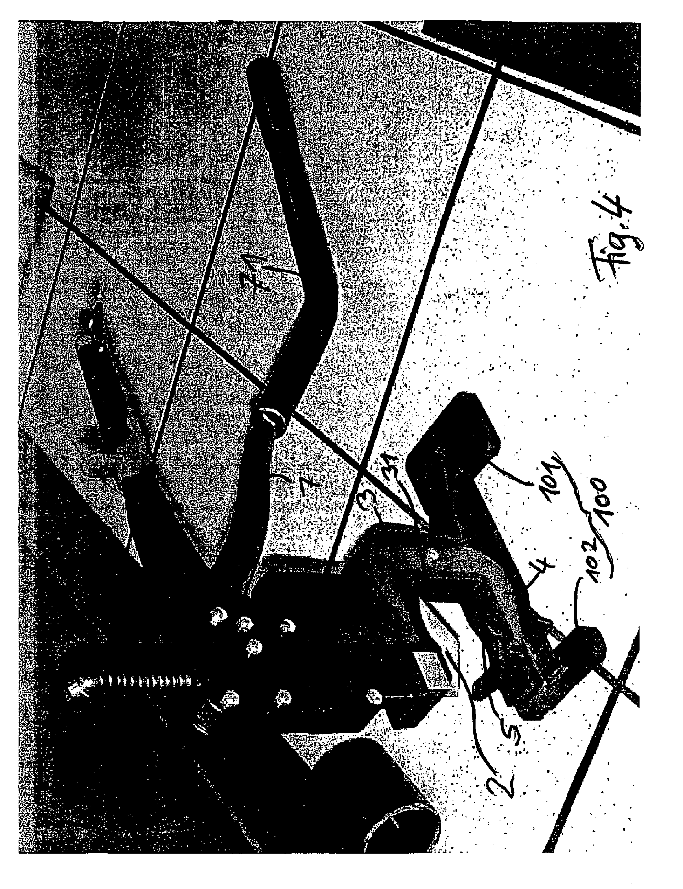

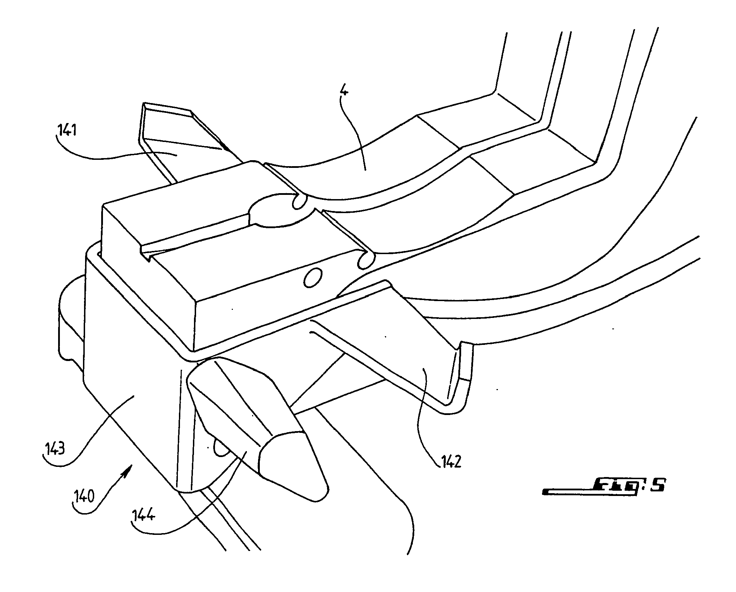

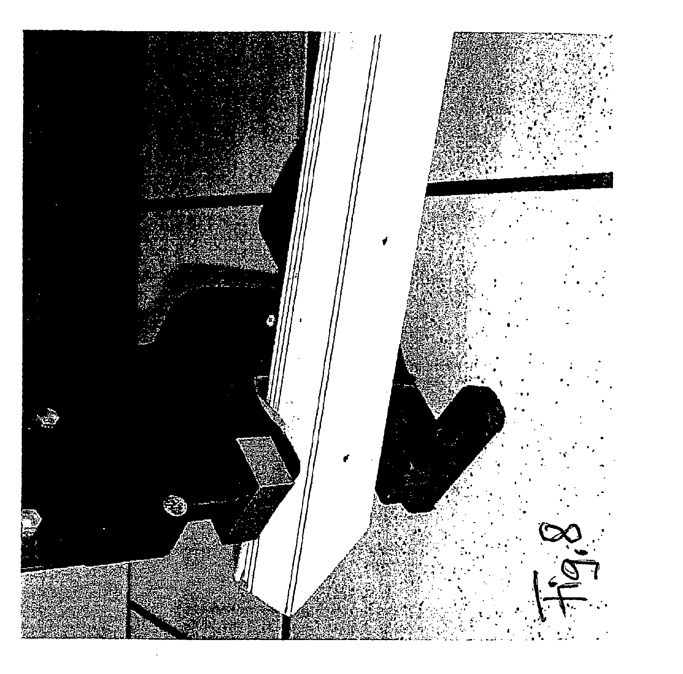

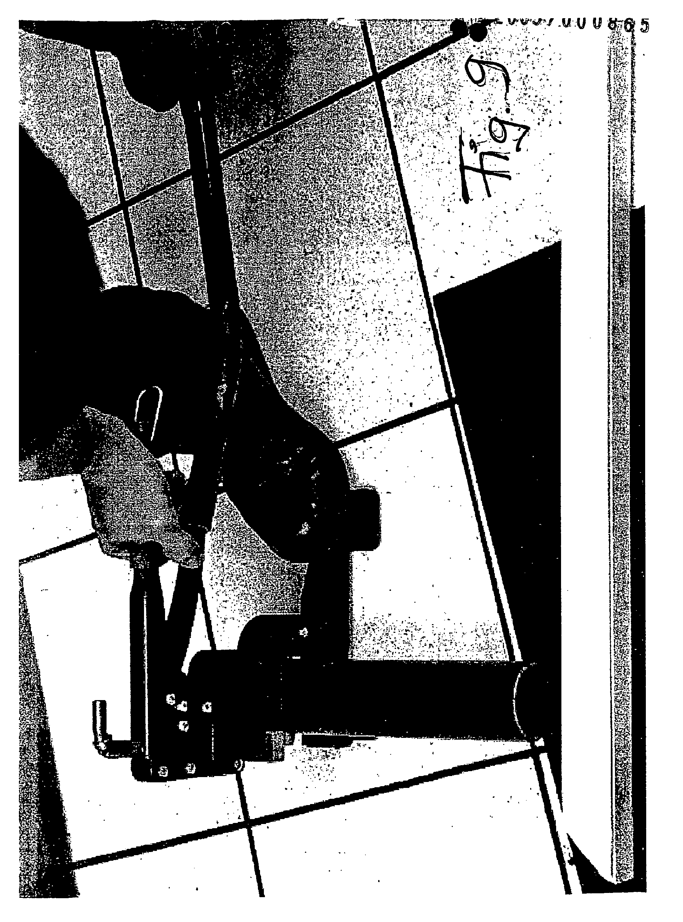

L'outil de coupe selon un second mode de réalisation de l'invention comporte, comme représenté sur la figure 4, essentiellement les mêmes pièces et éléments que l'outil de la figure 1. Pour cette raison, les pièces et éléments des deux modes de .réalisations de l'outil de l'invention portent dans les dessins les mêmes références. Ainsi, l'outil représenté sur les figures 4 et 9 en entier et sur les figures 5 à 8 par quelques détails, comporte un socle 100 en forme de « H » avec deux traverses 101, 102 et une lame 2 montée mobile sur une structure ou support 3 attaché au socle 1 et permettant de déplacer la lame 2 en translation axiale entre une position ouverte pour recevoir, entre le socle 100 et la lame 2, un profilé qui doit être découpé, et une position fermée à la fin d'une découpe. La lame 2 du second mode de réalisation ayant les mêmes caractéristiques que celle du premier mode de réalisation, une répétition de ces caractéristiques ici est omise.

Le socle 100 supporte une enclume 4 pourvue d'une rainure 5 conformée pour recevoir une partie de la lame 2 lorsque celle-ci se trouve en position fermée. Le support 3 est pourvu d'un moyen de guidage calibré 6 (voir figure 1) sous la forme d'un insert cylindrique creux assurant un déplacement rectiligne de la lame 2 entre la position ouverte et la position fermée. Le support 3 comprend également une rainure 31 orientée dans le sens des translations de la lame 2. La rainure 31 reçoit, de manière coulissante, un bord correspondant de la lame 2 pendant ses déplacements pour éviter tout effet de rotation de la lame 2 autour de son propre axe longitudinal.

L'outil de coupe comprend par ailleurs un premier levier 7 et un second levier 8 permettant à la fois de saisir l'outil et de faire déplacer la lame 2 de la position ouverte vers la position fermée. Le premier levier 7 est monté pivotant dans le support 3 autour d'un axe 9 (voir figure 1) transversal par rapport à l'étendue longitudinale de l'outil et coopère avec la lame 2 pour le déplacement de celle-ci de la position ouverte vers la position fermée, alors que le second levier 8, orienté perpendiculairement par rapport à l'étendue longitudinale du support 3, est monté fixe par rapport au support 3.

Lorsque l'outil de coupe est agencé pour la découpe de profilé ayant des dimensions moyennes, par exemple des diamètres ou largeurs de l'ordre de 40 à 70 mm, le premier levier 7 peut être équipé d'une rallonge tubulaire 71 amovible pour démultiplier son bras de levier. Selon la réalisation représentée sur les figures 4 et 9, le levier 7 est emboîté dans la rallonge tubulaire 71. Toutefois, d'autres types de levier rallongé sont également concevables : selon une variante non représentée dans les dessins, le premier levier 7 peut être réalisé sous la forme d'un bras ou levier escamotable formé en deux ou plusieurs parties reliées entre elles par des charnières afin de pouvoir replier le levier sur lui-même pendant le transport de l'outil ou lorsque l'outil est rangé.

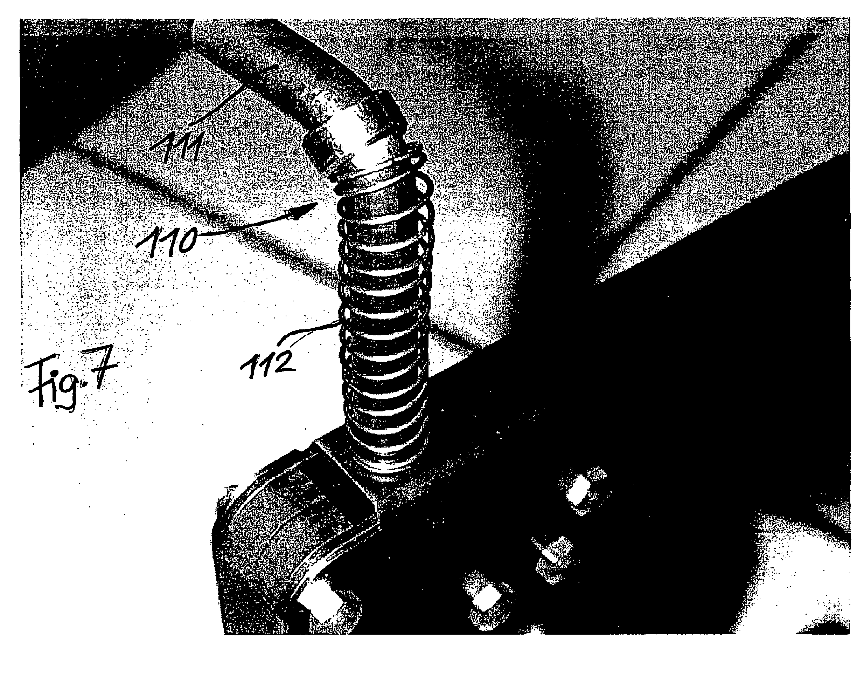

La lame 2 est montée sur une première extrémité d'une crémaillère 110 montrée en détail sur la figure 7. La crémaillère 110, qui a une seconde extrémité courbée 111, est montée coulissante dans le moyen de guidage calibré 6 et dépasse du support 3, du côté opposé par rapport à la lame 2, par la seconde extrémité 111 qui est pourvue d'un ressort de rappel 112 et qui forme une poignée permettant de tourner la crémaillère 110 autour de son axe longitudinal entre une position active permettant à la crémaillère 110 de coopérer avec le premier levier 7 pour déplacer la lame 2 de la position ouverte vers la position fermée, et une position passive permettant de déplacer la lame 2, sous l'action du ressort de rappel 112, de la position fermée vers la position ouverte.

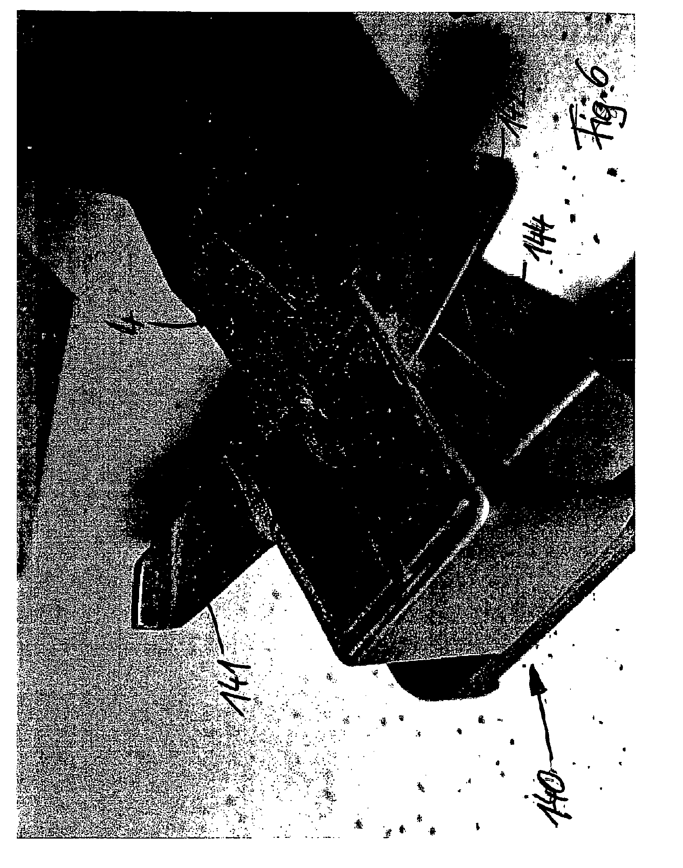

Pour faciliter la découpe en biseau, l'enclume 4 est pourvue de butées 141, 142 reliées l'une à l'autre par une pièce 143 en forme de « U ». Les butées 141, 142 et la pièce 143 forment une unité amovible 140 montée de manière amovible sur l'enclume 4 et conformée de manière à permettre de positionner le profilé, qui doit être découpé, dans une position angulaire précise par rapport à l'orientation de la lame 2. Les butées 141, 142 sont avantageusement pourvues chacune d'un trou oblong 144 permettant de fixer l'unité de butées 140, par vissage à l'aide d'un boulon 43 (voir aussi figure 3) en au moins deux positions différentes, une position rétractée représentée sur la figure 5 et une position de travail représentée sur la figure 6, sans avoir besoin de défaire la fixation entièrement.

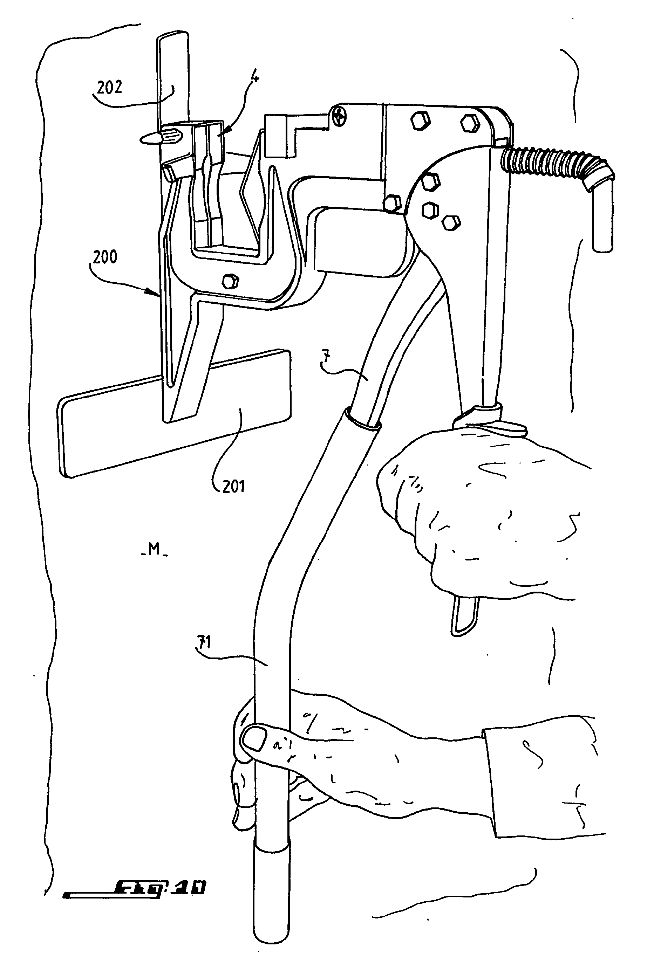

La figure 10 montre une variante d'un outil selon le second mode de réalisation de l'invention. Selon cette variante, l'outil comprend un socle trépied 200 à la place d'un socle pourvu de deux traverses. Le socle trépied 200 peut d'ailleurs aussi être appliquée à un outil réalisé selon le premier mode de réalisation de l'invention.

Le socle trépied 200 comprend une traverse 201 orientée sensiblement perpendiculairement par rapport à l'orientation de la lame 2 et une prolongation 202 s'étendant suivant l'orientation de la lame 2, la traverse 201 étant disposée du côté des leviers 7, 8 de l'outil et la prolongation 202 s'étendant au-delà de l'enclume 4 en s'éloignant de la traverse 201. L'avantage du socle trépied 200 par rapport à un socle 100 en « H » est une meilleure stabilité pendant la coupe, puisque par le sens de pivotement du premier levier 7 lors de la coupe, notamment en cas de démultiplication par la rallonge 71, les efforts exercés sur l'outil sont plus grands à l'avant de l'outil qu'à l'arrière, ce qui favorise un culbutage de l'outil vers l'avant.

La figure 10 montre par ailleurs que l'on peut utiliser l'outil de l'invention, quel que soit son mode de réalisation, aussi en position verticale, c'est-à-dire en appui contre un mur M. Dans cette position, l'outil sera avantageusement fixé au mur par des clous ou des vis. Toutefois, une utilisation libre, c'est-à-dire sans fixer l'outil au mur M, est également possible.

## Revendications

1. Outil de coupe pour découper des profilés creux en matière plastique, comportant un socle (1) et une lame (2) montée mobile sur un support (3) attaché au socle (1) et permettant de déplacer la lame (2) entre une position ouverte pour recevoir, entre le socle (1) et la lame (2), un profilé qui doit être découpé, et une position fermée à la fin d'une découpe,
**caractérisé en ce que** le socle (1) supporte une enclume (4) pourvue d'une rainure (5) conformée pour recevoir une partie de la lame (2) lorsque celle-ci se trouve en position fermée et **en ce que** le support (3) est pourvu d'un moyen de guidage calibré (6) assurant un déplacement rectiligne de la lame (2) entre la position ouverte et la position fermée.

2. Outil selon la revendication 1, **caractérisée en ce qu'**il comprend au moins un premier levier (7) monté pivotant dans le support (3) et destiné à coopérer avec la lame (2) au moins pour le déplacement de celle-ci (2) de la position ouverte vers la position fermée.

3. Outil selon la revendication 1 ou 2, **caractérisée en ce qu'**il comprend un premier (7) et un second (8) leviers articulés entre eux sur un axe de pivotement (9) permettant à la fois de saisir l'outil et de faire déplacer la lame (2) au moins de la position ouverte vers la position fermée.

4. Outil selon la revendication 3, **caractérisé en ce que** le premier levier (7) est monté à la fois pivotant par rapport au second levier (8) et pivotant par rapport au support (3) et **en ce que** le second levier (8) est monté fixe par rapport au support (3).

5. Outil selon l'une quelconque des revendications 2 à 4, **caractérisé en ce que** la lame (2) est montée sur une première extrémité (11) d'une crémaillère (10, 110) ayant un axe longitudinal (13) et qui est montée coulissante dans le moyen de guidage calibré (6) et dépasse du support (3), du côté opposé par rapport à la lame (2), par une seconde extrémité (12, 111), opposée à la première extrémité (11), quelque soit la position de la lame (2), la crémaillère (10, 110) étant destinée à être actionnée par le premier levier (7).

6. Outil selon la revendication 5, **caractérisé en ce que** la seconde extrémité (12) de la crémaillère (10) est munie d'une poignée (14) permettant de tourner la crémaillère (10) autour de son axe longitudinal (13) entre une position active permettant à la crémaillère (10) de coopérer avec le premier levier (7) pour déplacer la lame (2) de la position ouverte vers la position fermée, et une position passive permettant de déplacer la lame (2) de la position fermée vers la position ouverte.

7. Outil selon l'une quelconque des revendications 1 à 6, **caractérisé en ce que** la lame (2) est pourvue de deux tranchants (21, 22) successifs formant une pointe (23) entre eux et enfermant un angle obtus allant de 110° à 150° environ.

8. Outil selon l'une quelconque des revendications 1 à 7, **caractérisé en ce que** la lame (2) a une forme symétrique.

9. Outil selon l'une quelconque des revendications 1 à 8, **caractérisé en ce que** le socle (1) est pourvu de butées (41, 42) montées de part et d'autre du socle (1) et conformées de manière à permettre de positionner le profilé, qui doit être découpé, dans une position angulaire précise par rapport à l'orientation de la lame (2) pour obtenir une découpe en biseau du profilé.

10. Outil selon l'une quelconque des revendications 1 à 9, **caractérisé en ce que** l'enclume (4) est pourvu de butées (41, 42) disposées de part et d'autre du socle (1) et conformées de manière à permettre de positionner le profilé, qui doit être découpé, dans une position angulaire précise par rapport à l'orientation de la lame (2) pour obtenir une découpe en biseau du profilé, l'enclume (4) et les butées (41, 42) formant une unité amovible (50) conformée pour un angle particulier de biseau et interchangeable avec d'autres unités interchangeables (50A) conformées pour d'autres angles particuliers de biseau.

## Claims

1. A tool for cutting hollow profiles of plastic, comprising a base plate (1) and a blade (2) movably mounted on a holder (3) attached to the base plate (1) and enabling the blade (2) to be moved between an open position for receiving between the base plate (1) and the blade (2) a profile to be cut and a closed position when cutting is finished,
**characterized in that** the base plate (1) supports an anvil (4) provided with a groove (5) shaped to receive one portion of the blade (2) when the latter is in the closed position, and that the holder (3) is provided with calibrated guiding means (6) ensuring straight movement of the blade (2) between the open position and the closed position.

2. The tool according to claim 1, **characterized in that** it comprises at least a first lever (7) pivotingly mounted in the holder (3) and for cooperating with the blade (2) at least for moving said blade (2) from the open position to the closed position.

3. The tool according to claim 1 or 2, **characterized in that** it comprises a first (7) and a second (8) lever articulated together on a fulcrum pin (9) allowing both for the tool to be grasped and for the blade (2) to be moved at least from the open position to the closed position.

4. The tool according to claim 3, **characterized in that** the first lever (7) is mounted both pivotingly with respect to the second lever (8) and pivotingly with respect to the holder (3) and that the second lever (8) is mounted securely with respect to the holder (3).

5. The tool according to any of claims 2 to 4, **characterized in that** the blade (2) is mounted on a first end (11) of a rack (10, 110) having a longitudinal axis (13) and which is slidingly mounted in the calibrated guiding means (6) and protrudes from the holder (3), on the side opposite the blade (2), with a second end (12, 111) opposite the first end (11), whichever the position of the blade (2), the rack (10, 110) being designed to be actuated by the first lever (7).

6. The tool according to claim 5, **characterized in that** the second end (12) of the rack (10) is provided with a handle (14) allowing the rack (10) to be turned around the longitudinal axis (13) thereof between an active position enabling the rack (10) to cooperate with the first lever (7) in order to move the blade (2) from the open position to the closed position, and a passive position allowing the blade (2) to be moved from the closed position to the open position.

7. The tool according to any of claims 1 to 6, **characterized in that** the blade (2) is provided with two consecutive cutting edges (21, 22) together forming a tip (23) and enclosing an obtuse angle between about 110° and 150°.

8. The tool according to any of claims 1 to 7, **characterized in that** the blade (2) is shaped symmetrically.

9. The tool according to any of claims 1 to 8, **characterized in that** the base plate (1) is provided with stops (41, 42) mounted on both sides of the base plate (1) and shaped such that the profile to be cut can be positioned in a precise angular position with respect to the alignment of the blade (2) in order to obtain a bevel cut of the profile.

10. The tool according to any of claims 1 to 9, **characterized in that** the anvil (4) is provided with stops (41, 42) arranged on both sides of the base plate (1) and shaped such that the profile to be cut can be positioned in a precise angular position with respect to the alignment of the blade (2) in order to obtain a bevel cut of the profile, with the anvil (4) and the stops (41, 42) forming a removable unit (50) shaped for a specific bevel angle and interchangeable with other interchangeable units (50A) shaped for other specific bevel angles.

## Patentansprüche

1. Werkzeug zum Schneiden von Hohlprofilen aus Kunststoff, umfassend einen Sockel (1) und eine Schneide (2), die beweglich auf einem Träger (3) angebracht ist, der an dem Sockel (1) befestigt ist, und es ermöglicht, die Schneide (2) zwischen einer offenen Position, um zwischen dem Sockel (1) und der Schneide (2) ein auszuschneidendes Profil aufzunehmen, und einer geschlossenen Position am Ende eines Schneidevorgangs zu bewegen,
**dadurch gekennzeichnet, dass** der Sockel (1) einen Amboss (4) trägt, der mit einer Nut (5) versehen ist, die ausgeformt ist, um einen Teil der Schneide (2) aufzunehmen, wenn diese sich in der geschlossenen Position befindet, und dass der Halter (3) mit kalibrierten Führungsmitteln (6) versehen ist, die eine geradlinige Bewegung der Schneide (2) zwischen der offenen Position und der geschlossenen Position sicherstellen.

2. Werkzeug nach Anspruch 1, **dadurch gekennzeichnet, dass** es mindestens einen ersten Hebel (7) umfasst, der schwenkbar in dem Halter (3) gelagert ist und dazu gedacht ist, mit der Schneide (2) zusammenzuwirken, mindestens um die Schneide (2) von der offenen Position in die geschlossene Position zu bewegen.

3. Werkzeug nach Anspruch 1 oder 2, **dadurch gekennzeichnet, dass** es einen ersten (7) und einen zweiten (8) Hebel umfasst, die miteinander auf einer Schwenkachse (9) angelenkt sind, die sowohl das Ergreifen des Werkzeugs als auch die Bewegung der Schneide (2) mindestens von der offenen Position in die geschlossene Position ermöglichen.

4. Werkzeug nach Anspruch 3, **dadurch gekennzeichnet, dass** der erste Hebel (7) sowohl gegenüber dem zweiten Hebel (8) als auch gegenüber dem Halter (3) schwenkbar gelagert ist, und dass der zweite Hebel (8) im Verhältnis zum Halter (3) feststehend angebracht ist.

5. Werkzeug nach einem der Ansprüche 2 bis 4, **dadurch gekennzeichnet, dass** die Schneide (2) auf einem ersten Ende (11) einer Zahnstange (10, 110) angebracht ist, die eine Längsachse (13) aufweist und die gleitend in den kalibrierten Führungsmitteln (6) angebracht ist und auf der der Schneide (2) gegenüberliegenden Seite mit einem zweiten Ende (12, 111) gegenüber dem ersten Ende (11) aus dem Halter (3) herausragt, bei einer beliebigen Position der Schneide (2), wobei die Zahnstange (10, 110) dazu gedacht ist, vom ersten Hebel (7) betätigt zu werden.

6. Werkzeug nach Anspruch 5, **dadurch gekennzeichnet, dass** das zweite Ende (12) der Zahnstange (10) mit einem Griff (14) versehen ist, der es ermöglicht, die Zahnstange (10) um ihre Längsachse (13) zwischen einer aktiven Position, die es der Zahnstange (10) ermöglicht, mit dem ersten Hebel (7) zusammenzuwirken, um die Schneide (2) von der offenen Position in die geschlossene Position zu bewegen, und einer passiven Position, die es ermöglicht, die Schneide (2) von der geschlossenen Position in die offene Position zu bewegen, zu drehen.

7. Werkzeug nach einem der Ansprüche 1 bis 6, **dadurch gekennzeichnet, dass** die Schneide (2) mit zwei aufeinander folgenden Schneidkanten (21, 22) versehen ist, die zusammen eine Spitze (23) bilden und einen stumpfen Winkel zwischen ungefähr 110° und 150° einschließen.

8. Werkzeug nach einem der Ansprüche 1 bis 7, **dadurch gekennzeichnet, dass** die Schneide (2) eine symmetrische Form aufweist.

9. Werkzeug nach einem der Ansprüche 1 bis 8, **dadurch gekennzeichnet, dass** der Sockel (1) mit Anschlägen (41, 42) versehen ist, die auf beiden Seiten des Sockels (1) angebracht sind und derart ausgeformt sind, dass das auszuschneidende Profil in einer genauen Winkelposition im Verhältnis zur Ausrichtung der Schneide (2) positioniert werden kann, um einen Schrägschnitt des Profils zu erhalten.

10. Werkzeug nach einem der Ansprüche 1 bis 9, **dadurch gekennzeichnet, dass** der Amboss (4) mit Anschlägen (41, 42) versehen ist, die auf beiden Seiten des Sockels (1) angeordnet sind und derart ausgeformt sind, dass das auszuschneidende Profil in einer genauen Winkelposition im Verhältnis zur Ausrichtung der Schneide (2) positioniert werden kann, um einen Schrägschnitt des Profils zu erhalten, wobei der Amboss (4) und die Anschläge (41, 42) eine abnehmbare Einheit (50) bilden, die für einen bestimmten Schrägwinkel ausgeformt ist und mit anderen austauschbaren Einheiten (50A), die für andere bestimmte Schrägwinkel ausgeformt sind, austauschbar ist.
